# FASCICULE DE BREVET EUROPEEN

(11) **EP 0 840 931 B1**
(45) Date de publication et mention de la délivrance du brevet: **24.11.1999**
(21) Numéro de dépôt: 96926439.9
(22) Date de dépôt: 22.07.1996
(51) Int. Cl.: G21C 3/07

(54) **TUBE POUR ASSEMBLAGE DE COMBUSTIBLE NUCLEAIRE ET PROCEDE DE FABRICATION D'UN TEL TUBE**
ROHR FÜR EIN KERNBRENNSTABBÜNDEL UND ZUGEHÖRIGES FERTIGUNGSVERFAHREN
TUBE FOR A NUCLEAR FUEL ASSEMBLY AND METHOD FOR MAKING SAME

(30) Priorité: 27.07.1995 FR 9509166
(43) Date de publication de la demande: 13.05.1998
(73) Titulaire: FRAMATOME, 92400 Courbevoie (FR); COMPAGNIE GENERALE DES MATIERES NUCLEAIRES, 78140 Velizy Villacoublay (FR)
(72) Inventeur: MARDON, Jean-Paul, F-69300 Caluire (FR); SEVENAT, Jean, F-44250 Saint-Brévin-les-Pins (FR); CHARQUET, Daniel, F-73400 Ugine Cédex (FR)
(74) Mandataire: Fort, Jacques
(86) Numéro de dépôt international: FR9601149
(87) Numéro de publication internationale: WO9705628

(56) Documents cités:
- EP-A- 0 533 073
- WO-A-94/23081
- US-A- 5 254 308
- PATENT ABSTRACTS OF JAPAN vol. 016, no. 393 (P-1406) 20 Août 1992 & JP,A,04 128 687 (NUCLEAR FUEL IND LTD) 30 Avril 1992

## Description

La présente invention concerne les tubes en alliage à base de zirconium utilisables notamment pour constituer la totalité ou la partie externe de la gaine d'un crayon de combustible nucléaire, ainsi que leur procédé de fabrication.

On a jusqu'ici surtout utilisé des gaines en alliage dit "Zircaloy 4" qui contiennent de l'étain, du fer et du chrome en plus du zirconium. On a proposé de nombreuses autres compositions, avec des plages de teneur qui sont souvent tellement larges qu'elles apparaissent immédiatement comme purement spéculatives à l'homme de métier.

On a en particulier proposé divers alliages avec une teneur en niobium dans une plage tellement large que la tenue au fluage thermique est très médiocre pour les valeurs maximales, quels que soient les traitements métallurgiques d'élaboration.

On a également proposé des alliages contenant notamment, en plus du zirconium, de l'étain, destiné à améliorer la tenue au fluage, et du fer.

L'invention vise notamment à fournir des tubes présentant à la fois un bon comportement au fluage et à la corrosion, même en milieu lithié à haute température, pouvant cependant être fabriqués avec un taux de rebut réduit, utilisable pour constituer des gaines ou des tubes guides d'assemblage de combustible.

Une des causes de rebut est la formation, lors des traitements thermomécaniques, de criques qui conduisent à des défauts rendant les tubes inacceptables ; ce risque existe notamment pour des teneurs en étain élevées.

Pour arriver aux résultats ci-dessus, l'invention propose notamment un tube en alliage à base de zirconium contenant, en poids, 0,8 à 1,8 % de niobium, 0,2 à 0,6 % d'étain et 0,02 à 0,4 % de fer, l'alliage étant à l'état recristallisé ou à l'état détendu, suivant que l'on veut favoriser la résistance à la corrosion ou au fluage.

L'alliage a une teneur en carbone comprise entre 30 et 180 ppm, une teneur en silicium comprise entre 10 et 120 ppm et une teneur en oxygène comprise entre 600 et 1800 ppm.

La teneur relativement élevée en niobium, toujours supérieure à la limite de solubilité (environ 0,6 %), donne une résistance élevée à la corrosion en milieu aqueux à haute température. Utilisé seul, le niobium à ces teneurs donne à l'alliage des caractéristiques de fluage intéressantes mais insuffisantes. L'étain, associé au niobium, améliore la tenue au fluage ainsi que la tenue en milieu aqueux lithié sans risquer de provoquer des criques lors du laminage lorsqu'il a une teneur ne dépassant pas 0,6 %. Une teneur en fer allant jusqu'à 0,4 % participe à la compensation de l'effet défavorable de l'étain sur la corrosion généralisée.

Les teneurs indiquées ci-dessus tiennent compte de ce que les tolérances et les variations au sein d'un même lingot font que les limites peuvent être atteintes même pour des teneurs nominales spécifiques dans un intervalle plus restreint. Par exemple, des teneurs nominales de 0,84 % et 1,71 % de niobium peuvent conduire, dans un même lingot, à des teneurs locales de 0,8 % et 1,8 % suivant qu'on est en tête ou en pied du lingot.

L'alliage contient, en plus des éléments ci-dessus, les impuretés inévitables, toujours à de très faibles teneurs.

Il a été constaté que des teneurs nominales comprises entre 0,9 % et 1,1 % de niobium, entre 0,25 % et 0,35 % d'étain et entre 0,2 et 0,3 % de fer donnaient des résultats particulièrement favorables.

Du fait de la teneur relativement faible en étain, la recristallisation au cours de l'élaboration peut être effectuée à une température relativement basse, inférieure à 620°C, ce qui a un effet favorable sur la résistance à la corrosion à chaud et sur le fluage.

L'invention propose également un procédé de fabrication de tube destiné à constituer une gaine de crayon de combustible nucléaire ou un tube guide pour assemblage de combustible nucléaire. La phase initiale de l'élaboration peut être celle classiquement utilisée pour les alliages dits "Zircaloy 4". En revanche, les phases finales sont différentes et notamment ne font intervenir que des traitements thermiques de recristallisation à température relativement faible.

Le procédé peut notamment comprendre les étapes suivantes :
- on constitue une barre en un alliage à base de zirconium ayant la composition mentionnée ci-dessus ;
- on trempe à l'eau la barre après chauffage entre 1000°C et 1200°C ;
- on file la barre à l'état d'ébauche tubulaire, après chauffage à une température comprise entre 600°C et 800°C ;
- on recuit l'ébauche filée à une température comprise entre 590°C et 650°C ;
- on lamine à froid ladite ébauche, en au moins quatre passes, pour obtenir un tube, avec des traitements thermiques intermédiaires entre 560°C et 620°C.

Le taux de recristallisation est avantageusement croissant d'une étape à la suivante pour affiner la taille de grain.

On effectue en général un traitement thermique final, entre 560°C et 620°C lorsque l'alliage doit être à l'état recristallisé, entre 470°C à 500°C lorsque le tube doit être utilisé à l'état détendu.

L'alliage ainsi obtenu présente une résistance à la corrosion généralisée, dans un milieu aqueux à haute température représentatif des conditions en réacteur à eau sous pression, comparable à celle des alliages connus Zr-Nb à teneur élevée en niobium ; sa résistance au fluage thermique est très supérieure à celle de tels alliages et elle est comparable à celle des meilleurs alliages "Zircaloy 4".

A titre d'exemple, un alliage de 0,9 % à 1,1 % de niobium, de 0,25 % à 0,35 % d'étain et de 0,03 à 0,06 % de fer a été réalisé. La séquence de traitement métallurgique utilisée comportait un laminage en quatre cycles, entre lesquels étaient intercalés des traitements thermiques de deux heures à 580°C. Les taux d'écrouissage et les taux de recristallisation étaient les suivants :

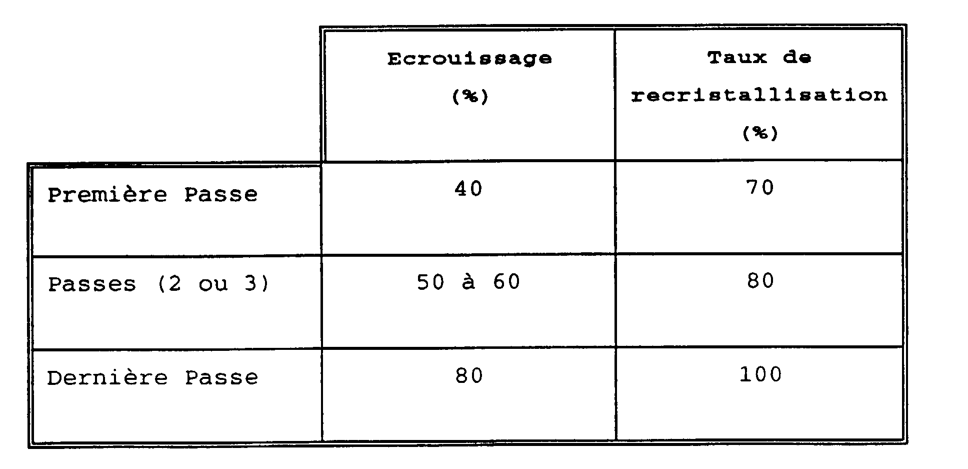

Des essais complémentaires ont été effectués pour déterminer l'influence des teneurs en fer et en étain sur des alliages à 1 % de niobium, ayant des teneurs en C, Si et O₂, dans les plages données plus haut, amenés à l'état de tôles et ayant subi un traitement correspondant à un ΣA de 5,23 x 10⁻¹⁸, terminé par une recristallisation à 580° C. Les essais de corrosion ont été effectués :
- à 500° C, 415° C et 400° C en phase vapeur d'eau,
- à 360° C, dans de l'eau à 70 ppm de lithium.

Les résultats d'essais sont représentés sur les dessins ci-joints, dans lesquels :
- les figures 1 et 2 donnent le gain de poids d'alliages suivant l'invention après une exposition de 140 jours à l'eau lithiée, à 360° C, pour diverses teneurs en Sn et Fe ;
- la figure 3 donne le gain de poids, représentatif de la corrosion uniforme, après une exposition de 132 jours à 400° C à l'eau en phase vapeur.
- la figure 4, similaire à la figure 3, correspond à une exposition de 155 jours à 415° C ;
- la figure 5, encore similaire à la figure 3, correspond à une exposition de 24 heures à la vapeur d'eau à 500° C et est représentative de la corrosion nodulaire ;
- la figure 6 est un schéma montrant les limites des zones de tenue particulièrement favorable en corrosion dans diverses conditions, faisant apparaître l'intérêt particulier des plages 0,2-0,3 % Sn et 0,15-0,3 % Fe en ce qui concerne la résistance à la corrosion.

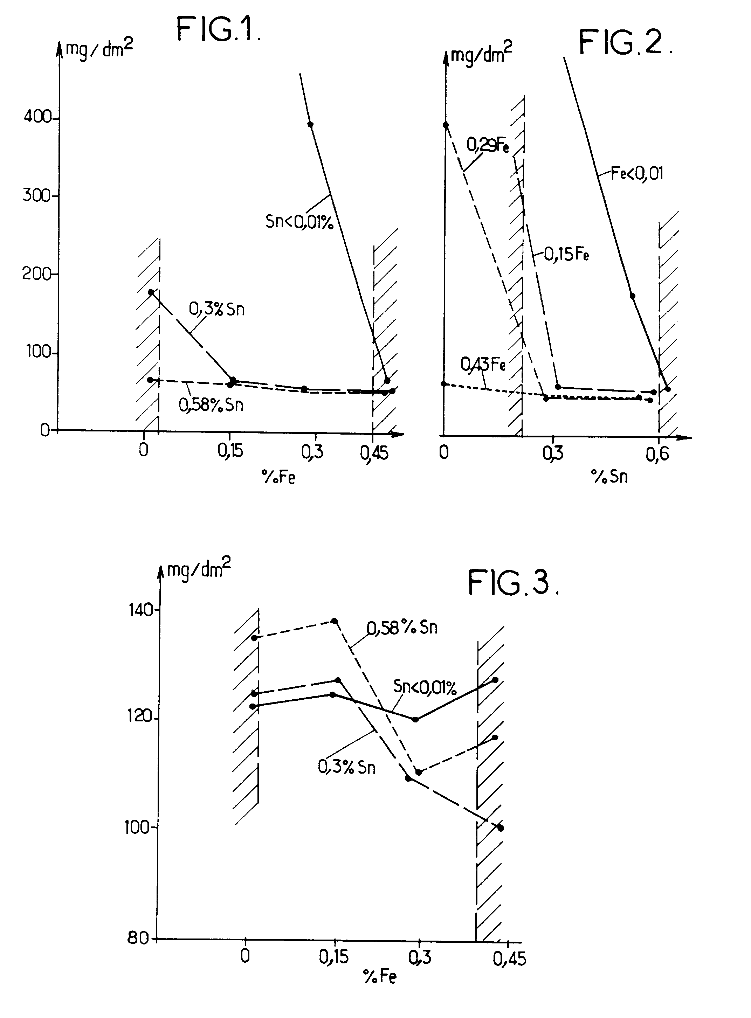

Les figures 1 et 2 montrent l'absence d'amélioration de la résistance à la corrosion dans l'eau lithiée au-delà de 0,6 % Sn et 0,2 % Fe.

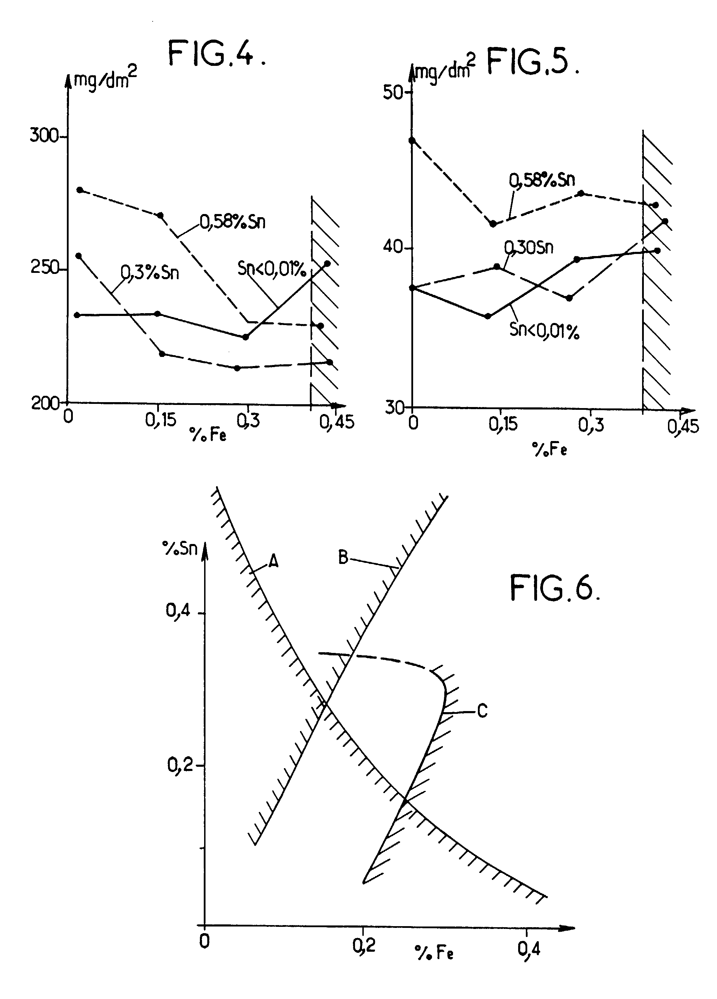

Les figures 3 et 4 montrent l'intérêt d'une teneur élevée en fer, supérieure à 0,2 %, pour améliorer la résistance à la corrosion en phase vapeur à 400° C et 415° C et réduire l'incidence défavorable d'une teneur élevée en Sn. Ces figures montrent également que les résultats favorables que l'on observe pour les alliages selon l'invention sont perdus si la teneur en étain est faible ou nulle.

Enfin, la figure 5 montre une dégradation progressive de la résistance à la corrosion nodulaire lorsqu'on augmente la teneur en étain, sans que la présence de fer puisse améliorer sensiblement les caractéristiques. La figure 5 montre qu'au delà d'une teneur en étain de 0,6 %, la corrosion s'accélère et également que, pour une teneur en étain acceptable, la corrosion augmente avec la teneur en fer au-delà de 0,3 % environ de fer.

De l'ensemble des résultats obtenus, il ressort qu'une plage de composition intéressante du point de vue de la corrosion est celle délimitée par les trois courbes montrées en figure 6. La courbe A délimite la zone qui semble intéressante pour ce qui est de la tenue dans l'eau à 360° C à 70 ppm de lithium, c'est-à-dire dans des conditions plus sévères que celles qui règnent dans un réacteur en ce qui concerne la teneur en lithium. La courbe B délimite la zone de tenue satisfaisante dans la vapeur d'eau lithiée, en phase vapeur, à une température dépassant légèrement 400°. Enfin, la courbe C correspond à peu près à la limite des teneurs acceptables pour ce qui est de la résistance à la corrosion nodulaire, dans l'eau en phase vapeur à 500° C.

Il est possible de dépasser la zone ainsi délimitée lorsque certains des types de corrosion mentionnés plus haut sont peu à craindre.

## Revendications

1. Tube en alliage à base de zirconium, destiné à constituer la totalité ou la partie externe d'une gaine de crayon de combustible nucléaire ou un tube guide pour assemblage de combustible nucléaire contenant, en poids, 0,8 à 1,8 % de niobium, 0,2 à 0,6 % d'étain et 0,02 à 0,4 % de fer, plus les impuretés inévitables et ayant une teneur en carbone comprise entre 30 et 180 ppm, une teneur en silicium comprise entre 10 et 120 ppm et une teneur en oxygène comprise entre 600 et 1800 ppm.

2. Tube selon la revendication 1, caractérisé en ce que l'alliage est à l'état recristallisé.

3. Tube selon la revendication 1, caractérisé en ce que l'alliage est à l'état détendu.

4. Tube selon la revendication 1, 2 ou 3, caractérisé en ce que l'alliage a une teneur nominale comprise entre 0,9 % et 1,1 % de niobium, entre 0,25 % et 0,35 % d'étain et entre 0,2 % et 0,3 % de fer.

5. Procédé de fabrication d'un tube selon la revendication 1, caractérisé en ce qu'il comporte la séquence suivante :
- on constitue une barre en un alliage contenant 0,8 à 1,8 % de niobium, 0,2 à 0,6 % d'étain et 0,02 à 0,4 % de fer ;
- on trempe à l'eau la barre, après chauffage entre 1000°C et 1200°C ;
- on file la barre à l'état d'ébauche après chauffage à une température comprise entre 600°C et 800°C ;
- on recuit l'ébauche filée à une température comprise entre 590°C et 650°C ;
- on lamine à froid ladite ébauche, en au moins quatre passes, pour obtenir un tube, avec des traitements thermiques intermédiaires entre 560°C et 620°C.

6. Procédé selon la revendication 5, caractérisé en ce que les passes de laminage s'effectuent sur des tubes à taux de recristallisation croissants.

7. Procédé selon la revendication 5 ou 6, caractérisé par une étape finale de traitement thermique de recristallisation à une température comprise entre 560°C et 620°C.

8. Procédé suivant la revendication 5 ou 6, caractérisé en ce que le procédé comporte une étape finale de détente de 470°C à 500°C environ.

## Patentansprüche

1. Rohr aus einer Legierung auf der Basis von Zirconium, das dazu dient, die Gesamtheit oder den äußeren Teil einer Brennstabhülle von Kernbrennelementen oder ein Führungsrohr für eine Kernbrennelementanordnung zu bilden, die enthält an Gewicht 0,8 bis 1,8 % Niob, 0,2 bis 0,6 % Zinn und 0,02 bis 0,4 % Eisen, sowie die unvermeidbaren Verunreinigung und einen Gehalt an Karbon zwischen 30 und 130 ppm, einen Gehalt an Silicium zwischen 10 und 120 ppm und einen Gehalt an Sauerstoff zwischen 600 und 1800 ppm aufweist.

2. Rohr nach Anspruch 1, dadurch gekennzeichnet, daß die Legierung sich im rekristallisierten Zustand befindet.

3. Rohr nach Anspruch 1, dadurch gekennzeichnet, daß die Legierung sich im entspannten Zustand befindet.

4. Rohr nach Anspruch 1, 2 oder 3, dadurch gekennzeichnet, daß die Legierung einen nominalen Gehalt zwischen 0,9% und 1,1 % Niob, zwischen 0,25 % und 0,35 % Zinn und zwischen 0,2 % und 0,3 % Eisen aufweist.

5. Verfahren zur Herstellung eines Rohres nach Anspruch 1, dadurch gekennzeichnet, daß es die folgenden Verfahrensschritte aufweist:
- Bilden eines Stabes aus einer Legierung, die 0,8 bis 1,8 % Niob, 0,2 bis 0,6 % Zinn und 0,02 bis 0,4 % Eisen aufweist;
- In-Wasser-Tauchen des Stabes, nach einem Aufheizen auf zwischen 1000°C und 1200°C;
- Strangpressen des Stabes zu einem Rohlingzustand nach Aufheizen auf eine Temperatur zwischen 600°C und 800°C;
- Glühen des stranggepressten Rohlings bei einer Temperatur zwischen 590°C und 650°C;
- Kaltwalzen des Rohlings in wenigstens vier Durchgänge, um ein Rohr zu erhalten mit Zwischenwärmebehandlungen zwischen 560°C und 620°C.

6. Verfahren nach Anspruch 5, dadurch gekennzeichnet, daß die Walzvorgänge auf Rohre mit zunehmenden Rekristallisationsmaßen vorgenommen werden.

7. Verfahren nach Anspruch 5 oder 6, gekennzeichnet durch einen Endbehandlungsschritt der thermischen Rekristallisation bei einer Temperatur zwischen 560°C und 620°C.

8. Verfahren nach Anspruch 5 oder 6, dadurch gekennzeichnet, daß das Verfahren einen Endentspannungsschritt von ungefähr 470°C bis 500°C aufweist.

## Claims

1. A tube of zirconium-based alloy for constituting all or the outside portion of cladding for a nuclear fuel rod or of a guide tube for a nuclear fuel assembly,containing, by weight, 0.8% to 1.8% niobium, 0.2% to 0.6% tin, and 0.02% to 0.4% iron, plus unavoidable impurities, and having a carbon content lying in the range 30 ppm to 180 ppm, a silicon content lying in the range 10 ppm to 120 ppm, and an oxygen content lying in the range 600 ppm to 1800 ppm.

2. A tube according to claim 1, characterized in that the alloy is in the recrystallized state.

3. A tube according to claim 1, characterized in that the alloy is in the relaxed state.

4. A tube according to claim 1, 2, or 3, characterized in that the alloy has the following contents: 0.9% to 1.1% niobium, 0.25% to 0.35% tin, and 0.2% to 0.3% iron.

5. A method of manufacturing a tube according to claim 1, characterized in that it includes the following sequence:
· a bar is made of an alloy containing 0.8% to 1.8% niobium, 0.2% to 0.6% tin, and 0.02% to 0.4% iron;
· the bar is quenched in water, after being heated to a temperature in the range 1000°C to 1200°C;
· the bar is drawn into a blank after being heated to a temperature lying in the range 600°C to 800°C;
· the drawn blank is annealed at a temperature lying in the range 590°C to 650°C; and
· said blank is cold-rolled in at least four passes in order to obtain a tube, with intermediate heat treatments at temperatures in the range 560°C to 620°C.

6. A method according to claim 5, characterized in that the rolling passes are performed on tubes at increasing recrystallization ratios.

7. A method according to claim 5 or 6, characterized by a recrystallizing final heat treatment step at a temperature lying in the range 560°C to 620°C.

8. A method according to claim 5 or 6, characterized in that the method includes a relief final step at a temperature in the range about 470°C to 500°C.
